# EUROPEAN PATENT APPLICATION

(11) **EP 3 508 769 A1**
(43) Date of publication of application: **10.07.2019**
(21) Application number: 17845914.5
(22) Date of filing: 13.07.2017
(51) Int. Cl.: F16L 21/08, F16L 47/12

(54) **PIPE JOINT AND ENGAGEMENT MEMBER**

(30) Priority: 02.09.2016 JP 2016172019
(71) Applicant: Bridgestone Corporation, Tokyo 104-8340 (JP)
(72) Inventor: KASHIWAMATA Tomoaki, Tokyo 104-8340 (JP)
(74) Representative: Oxley, Robin John George
(86) International application number: PCT/JP2017/025581
(87) International publication number: WO 2018/042904

(57) **Abstract**

A pipe coupling 1 comprises: an inner cylindrical portion 110 configured such that, on an outer circumferential side of the inner cylindrical portion, a pipe 2 is to be inserted in a predetermined insertion direction ID; and an annular locking member 40 housed in a first groove 14 formed on an outer circumferential surface of the inner cylindrical portion, and configured to lock an inner circumferential surface of the pipe in a state in which the pipe is inserted on the outer circumferential side of the inner cylindrical portion.

## Description

### TECHNICAL FIELD

The present disclosure relates to a pipe coupling and a locking member.

### BACKGROUND

In some conventional pipe couplings, a locking member for preventing a pipe inserted in the pipe coupling from coming out of the pipe coupling is provided on the outer circumferential side of an insertion space into which the pipe is to be inserted (i.e. the outer circumferential side of the pipe to be connected to the pipe coupling) (for example, JP 2002-31282 A (PTL 1)). In such a pipe coupling, the locking member locks the outer circumferential surface of the pipe in a state in which the pipe is inserted in the insertion space, to prevent the pipe from coming out of the pipe coupling.

### CITATION LIST

### Patent Literature

PTL 1: JP 2002-31282 A

### SUMMARY

### (Technical Problem)

In the pipe coupling mentioned above, however, the locking member and a member for covering the locking member need to be provided on the outer circumferential side of the insertion space for the pipe. This causes the outer diameter of the pipe coupling to increase.

It could therefore be helpful to provide a pipe coupling and a locking member that achieve reduction of the pipe coupling outer diameter.

### (Solution to Problem)

A pipe coupling according to the present disclosure comprises: an inner cylindrical portion configured such that, on an outer circumferential side of the inner cylindrical portion, a pipe is to be inserted in a predetermined insertion direction; and an annular locking member housed in a first groove formed on an outer circumferential surface of the inner cylindrical portion, and configured to lock an inner circumferential surface of the pipe in a state in which the pipe is inserted on the outer circumferential side of the inner cylindrical portion.

A locking member according to the present disclosure is the locking member used in the pipe coupling described above.

### (Advantageous Effect)

It is thus possible to provide a pipe coupling and a locking member that can achieve reduction of outer diameter of the pipe coupling.

### BRIEF DESCRIPTION OF THE DRAWINGS

In the accompanying drawings:
FIG. 1 is a sectional view illustrating an embodiment of a pipe coupling according to the present disclosure in each of a state before insertion of a pipe and a state after insertion of the pipe;
FIG. 2 is an exploded perspective view illustrating the pipe coupling in FIG. 1 together with the pipe;
FIG. 3A is a perspective view illustrating an embodiment of a locking member according to the present disclosure;
FIG. 3B is a sectional view illustrating the locking member in FIG. 3A along line 3B-3B;
FIG. 4 is a sectional view illustrating how the locking member is mounted on an inner cylindrical portion when assembling the pipe coupling;
FIG. 5 is a sectional view illustrating a first modification of the pipe coupling according to the present disclosure in each of a state before insertion of a pipe and a state after insertion of the pipe;
FIG. 6 is a sectional view illustrating a second modification of the pipe coupling according to the present disclosure in each of a state before insertion of a pipe and a state after insertion of the pipe;
FIG. 7A is a perspective view illustrating a first modification of the locking member;
FIG. 7B is a sectional view illustrating the locking member in FIG. 7A along line 7B-7B;
FIG. 8A is a perspective view illustrating a second modification of the locking member;
FIG. 8B is a sectional view illustrating the locking member in FIG. 8A along line 8B-8B; and
FIG. 9 is a sectional view illustrating a third modification of the locking member.

### DETAILED DESCRIPTION

An embodiment of a pipe coupling and a locking member according to the present disclosure will be described below, with reference to drawings.

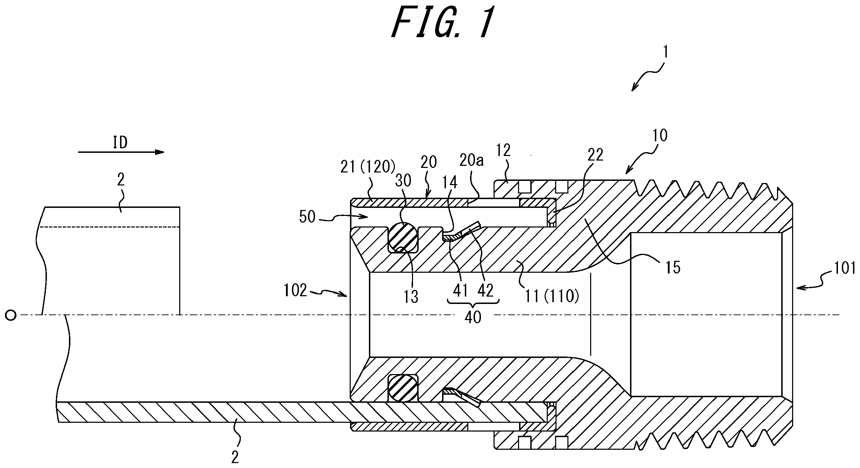

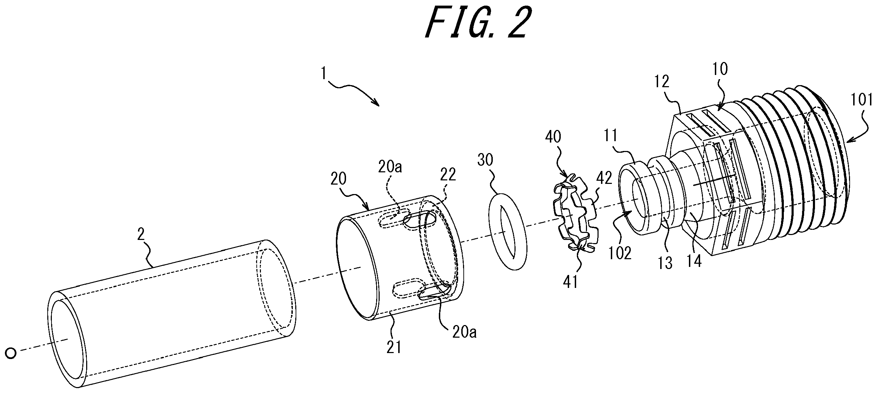

FIGS. 1 and 2 illustrate a pipe coupling 1 according to one of the disclosed embodiments, together with a pipe 2 to be connected to the pipe coupling 1. FIG. 1 is a sectional view illustrating the pipe coupling 1 according to this embodiment along the central axis O of the pipe coupling 1. The upper part of FIG. 1 illustrates a state before the pipe 2 is inserted into the pipe coupling 1, and the lower part of FIG. 1 illustrates a state after the pipe 2 is inserted into the pipe coupling 1. FIG. 2 is an exploded perspective view illustrating the pipe coupling 1 in FIG. 1 together with the pipe 2.

The pipe coupling 1 according to this embodiment is suitable for use as a water/hot water supply pipe, but may also be used as a pipe for all kinds of fluids including liquids other than water and gases. The pipe coupling 1 according to this embodiment includes a locking member 40 according to one of the disclosed embodiments, as described later.

The central axis O of the pipe coupling 1 is the flow path axis of a fluid passage defined inside the pipe coupling 1. In this embodiment, the pipe coupling 1 is approximately I-shaped, with a linear central axis O. However, the pipe coupling according to the present disclosure may have any shape, such as approximately L-shaped, approximately T-shaped, or approximately cross-shaped.

In the example illustrated in FIG. 1, the pipe coupling 1 has one pipe connection port 101 at the end on the axial (axial direction) first side (the right side in FIG. 1, hereafter the same), and another pipe connection port 102 at the end on the axial second side (the left side in FIG. 1, hereafter the same).

Herein, the "axial direction" refers to the direction parallel to the central axis O of the pipe coupling 1 when viewing the pipe coupling 1, and the direction parallel to the central axis of the locking member 40 when viewing the locking member 40 as a single body.

The pipe coupling 1 according to this embodiment includes a tubular pipe coupling body 10 defining the fluid passage on the inner circumferential side, the locking member 40 according to this embodiment, a sealing member 30, and a cover 20, as illustrated in FIGS. 1 and 2.

The pipe coupling body 10 is made of, for example, metal or resin. In the example in FIG. 1, the pipe coupling body 10 includes a tubular small-diameter cylindrical portion 11 defining the fluid passage on the inner circumferential side and a tubular large-diameter cylindrical portion 12 located on the outer circumferential side of the small-diameter cylindrical portion 11, in a part on the axial second side (the left side in FIG. 1). The inner diameter of the large-diameter cylindrical portion 12 is larger than the outer diameter of the small-diameter cylindrical portion 11. The end of the small-diameter cylindrical portion 11 on the axial first side (the right side in FIG. 1) and the end of the large-diameter cylindrical portion 12 on the axial first side (the right side in FIG. 1) are connected by a connecting portion 15 extending in the radial direction in an axial intermediate part of the pipe coupling body 10.

In this embodiment, the small-diameter cylindrical portion 11 of the pipe coupling body 10 constitutes an inner cylindrical portion 110 of the pipe coupling 1.

The small-diameter cylindrical portion 11 forms the pipe connection port 102 to which the pipe 2 is to be connected. More specifically, the small-diameter cylindrical portion 11 (i.e. the inner cylindrical portion 110) is configured to have the pipe 2 inserted in a predetermined insertion direction ID on the outer circumferential side of the small-diameter cylindrical portion 11. In the example in FIG. 1, the "predetermined insertion direction ID" is a direction parallel to the axial direction and toward the axial first side (the right side in FIG. 1). The pipe 2 is, for example, a water/hot water supply pipe made of polybutene or crosslinked polyethylene.

Herein, the axial first side is also referred to as the "far side in the insertion direction ID", and the axial second side as the "near side in the insertion direction ID".

In the example in FIG. 1, the end of the small-diameter cylindrical portion 11 on the axial second side (the left side in FIG. 1) is located more to the axial second side than the end of the large-diameter cylindrical portion 12 on the axial second side.

In the example in FIG. 1, the pipe coupling body 10 has a male screw on the outer circumferential surface in a part located more to the axial first side (the right side in FIG. 1) than the connecting portion 15, thus forming the pipe connection port 101. A pipe, a faucet member, or the like (not illustrated) having a female screw on the inner circumferential surface is to be connected to the pipe connection port 101.

The cover 20 is made of, for example, metal or resin. The cover 20 is located more to the outer circumferential side than the small-diameter cylindrical portion 11 of the pipe coupling body 10 and more to the inner circumferential side than the large-diameter cylindrical portion 12 of the pipe coupling body 10. In the example in FIG. 1, the cover 20 includes a tubular circumferential wall portion 21 and an annular end wall portion 22 that extends from the end of the circumferential wall portion 21 on the axial first side (the right side in FIG. 1) toward the inner circumferential side and has its inner circumferential end facing the outer circumferential surface of the small-diameter cylindrical portion 11 of the pipe coupling body 10.

In this embodiment, the circumferential wall portion 21 of the cover 20 constitutes an outer cylindrical portion 120 of the pipe coupling 1 located on the outer circumferential side of the inner cylindrical portion 110 (i.e. the small-diameter cylindrical portion 11) of the pipe coupling 1.

In the example in FIG. 1, the inner diameter of the circumferential wall portion 21 of the cover 20 is larger than the outer diameter of the small-diameter cylindrical portion 11 of the pipe coupling body 10. The circumferential wall portion 21 of the cover 20 is located on the outer circumferential side of the small-diameter cylindrical portion 11, approximately over the entire length of the small-diameter cylindrical portion 11 of the pipe coupling body 10 in the axial direction. An annular insertion space 50 into which the pipe 2 is to be inserted is defined between the outer circumferential surface of the small-diameter cylindrical portion 11 (i.e. the inner cylindrical portion 110) and the inner circumferential surface of the circumferential wall portion 21 (i.e. the outer cylindrical portion 120) of the cover 20.

The circumferential wall portion 21 (i.e. the outer cylindrical portion 120) of the cover 20 has a function of suppressing diameter-expansion deformation of the pipe 2 inserted in the insertion space 50 due to a pressure increase of the fluid in the pipe 2. By suppressing diameter-expansion deformation of the pipe 2, the inner circumferential surface of the pipe 2 can be prevented from separating from the locking member 40, so that the pipe 2 can be prevented from coming out of the pipe coupling 1 due to insufficient biting of the locking member 40 into the pipe 2. Moreover, by suppressing diameter-expansion deformation of the pipe 2, the inner circumferential surface of the pipe 2 can be prevented from separating from the sealing member 30, so that fluid leakage can be prevented.

In terms of improving the function of the cover 20 suppressing diameter-expansion deformation of the pipe 2, the cover 20 is preferably made of a material harder than the pipe 2. Specifically, the cover 20 is preferably made of metal, or resin harder than the material of the pipe 2. In the case where the cover 20 is made of metal, the weather resistance of the pipe coupling 1 can also be improved.

The outer diameter of the circumferential wall portion 21 of the cover 20 is approximately equal to or slightly smaller than the inner diameter of the large-diameter cylindrical portion 12 of the pipe coupling body 10. The large-diameter cylindrical portion 12 of the pipe coupling body 10 has a function of suppressing diameter-expansion deformation of the cover 20 (and therefore diameter-expansion deformation of the pipe 2), and also has a function of housing and/or holding the cover 20.

In the example in FIG. 1, the end wall portion 22 of the cover 20 is sandwiched between the pipe 2 and the connecting portion 15 of the pipe coupling body 10 in a state in which the pipe 2 is inserted in the insertion space 50, to hold the cover 20 so as not to come out of the large-diameter cylindrical portion 12 of the pipe coupling body 10.

Alternatively, the outer circumferential surface of the cover 20 may be fitted or press-fitted onto the inner circumferential surface of the large-diameter cylindrical portion 12 of the pipe coupling body 10, to hold the cover 20 so as not to come out of the large-diameter cylindrical portion 12 of the pipe coupling body 10. The cover 20 may not have the end wall portion 22.

The locking member 40 is made of, for example, metal. More specifically, the locking member 40 is formed by, for example, subjecting one metal plate to press working, slit formation, bending, etc.

As illustrated in FIG. 1, the locking member 40 extends annularly along the circumferential direction of the inner cylindrical portion 110. The locking member 40 is housed in an annular first groove 14 formed on the outer circumferential surface of the inner cylindrical portion 110. Thus, the locking member 40 is located on the inner circumferential side of the insertion space 50.

Regarding the locking member 40, the term "annular" encompasses not only the case where the locking member 40 extends continuously along the circumferential direction of the inner cylindrical portion 110 in an endless fashion (O-shaped), but also the case where the locking member 40 extend intermittently along the circumferential direction of the inner cylindrical portion 110 in the shape of the letter C or the like as a result of being discontinuous in at least one part.

More specifically, in the example in FIG. 1, the locking member 40 extends endlessly along the circumferential direction of the inner cylindrical portion 110 over the entire circumference.

The locking member 40 is configured to lock the inner circumferential surface of the pipe 2 in a state in which the pipe 2 is inserted in the insertion space 50 on the outer circumferential side of the inner cylindrical portion 110. By the locking member 40 locking the inner circumferential surface of the pipe 2, the pipe 2 inserted in the pipe coupling 1 is prevented from coming out of the pipe coupling 1.

In this embodiment, the locking member 40 extends endlessly over the entire circumference of the inner cylindrical portion 110. This suppresses diameter expansion of the locking member 40 more than in the case where the locking member 40 is not endless. Accordingly, once the locking member 40 has been installed in the first groove 14, the locking member 40 is firmly held by the inner cylindrical portion 110, so that the locking member 40 can be effectively kept from displacement from the first groove 14 or excessive deformation. The locking member 40 is thus prevented from coming out of the first groove 14. Hence, when inserting the pipe 2 around the inner cylindrical portion 110, the locking member 40 is prevented from coming out of the first groove 14. This can also improve the function of the locking member 40 locking the pipe 2, and suppress diameter-expansion deformation of the pipe 2 from the inner circumferential side of the pipe 2.

Alternatively, the locking member 40 may extend intermittently along the circumferential direction of the inner cylindrical portion 110 in, for example, the shape of the letter C. In this case, the locking member 40 can be installed in the first groove 14 of the inner cylindrical portion 110 more easily when assembling the pipe coupling 1.

As illustrated in FIG. 1, the locking member 40 according to this embodiment integrally includes, when viewed in a state of being mounted on the inner cylindrical portion 110, an inner cylinder engaging portion 41 engaging with the wall surface of the first groove 14 on the outer circumferential surface of the inner cylindrical portion 110, and a pipe locking portion 42 extending from the end of the inner cylinder engaging portion 41 on the far side in the insertion direction ID toward the outer circumferential side and configured to lock, at least at its outer circumferential end, the inner circumferential surface of the pipe 2 inserted on the outer circumferential side of the inner cylindrical portion 110.

In a state in which the locking member 40 is not mounted on the inner cylindrical portion 110 (i.e. a state in which no external force is exerted on the locking member 40), the outer diameter of the inner cylinder engaging portion 41 of the locking member 40 is slightly smaller than the outer diameter of the inner cylindrical portion 110. This enables the inner cylinder engaging portion 41 to be firmly held by the inner cylindrical portion 110 in a state in which the locking member 40 is mounted on the inner cylindrical portion 110.

In this embodiment, in a state in which the pipe 2 is not inserted in the insertion space 50, the pipe locking portion 42 extends from the inner cylinder engaging portion 41 toward the far side in the insertion direction ID and the outer circumferential side, and the tip (outer circumferential end) of the pipe locking portion 42 projects more to the outer circumferential side (and into the insertion space 50) than the outer circumferential surface of the inner cylindrical portion 110 and is directed to the far side in the insertion space 50, as illustrated in FIG. 1. Accordingly, when the pipe 2 is inserted in the insertion direction ID into the insertion space 50 on the outer circumferential side of the inner cylindrical portion 110, the tip (outer circumferential end) of the pipe locking portion 42 engages with the inner circumferential surface of the pipe 2 as if scratching the inner circumferential surface of the pipe 2. When the pipe 2 once inserted into the insertion space 50 is pulled in the direction (direction toward the axial second side) opposite to the insertion direction ID, the tip (outer circumferential end) of the pipe locking portion 42 gradually bites into the inner circumferential surface of the pipe 2, and locks the inner circumferential surface of the pipe 2. In this way, the pipe 2 is prevented from moving in the direction opposite to the insertion direction ID, that is, prevented from coming out of the pipe coupling 1.

The pipe locking portion 42 may extend from the inner cylinder engaging portion 41 toward the outer circumferential side in the direction perpendicular to the central axis O of the locking member 40. The same effects can be achieved in this case, too.

The sealing member 30 is made of, for example, an endless elastic member such as an O-ring. The sealing member 30 is housed in an endless second groove 13 formed on the outer circumferential surface of the inner cylindrical portion 110 over the entire circumference. Thus, the sealing member 30 is located on the inner circumferential side of the insertion space 50.

As illustrated in FIG. 1, in a state in which the pipe 2 is not inserted in the insertion space 50, the outer diameter of the sealing member 30 is slightly larger than the outer diameter of the inner cylindrical portion 110. When the pipe 2 is inserted into the insertion space 50 on the outer circumferential side of the inner cylindrical portion 110, the sealing member 30 deforms so as to be in close contact with the inner circumferential surface of the pipe 2, thus sealing the gap between the outer circumferential surface of the inner cylindrical portion 110 and the inner circumferential surface of the pipe 2 fluid-tight. Hence, fluid leakage can be prevented.

In this embodiment, the locking member 40 is housed in the first groove 14 formed on the outer circumferential surface of the inner cylindrical portion 110, as described above. Thus, the locking member 40 is located on the inner circumferential side of the insertion space 50 for the pipe 2 (i.e. on the inner circumferential side of the pipe 2 to be connected to the pipe coupling 1). The locking member 40 is configured to lock the inner circumferential surface of the pipe 2 in a state in which the pipe 2 is inserted on the outer circumferential side of the inner cylindrical portion 110. With such a structure, the outer diameter of the pipe coupling 1 can be reduced while maintaining the function of the locking member 40, as compared with the case where the locking member 40 is located on the outer circumferential side of the insertion space 50 (i.e. on the outer circumferential side of the pipe 2 to be connected to the pipe coupling 1) without changing the outer diameter of the pipe 2. This can make the whole pipe coupling 1 more compact. Therefore, the usage of materials and the number of parts required for the production of the pipe coupling 1 can be reduced, with it being possible to reduce costs. Moreover, the appearance of the pipe coupling 1 can be improved.

In addition, in the example in FIG. 1, the sealing member 30 is housed in the second groove 13 formed on the outer circumferential surface of the inner cylindrical portion 110, as described above. Thus, the sealing member 30 is located on the inner circumferential side of the insertion space 50, too. The outer diameter of the pipe coupling 1 can therefore be reduced as compared with the case where the sealing member 30 is located on the outer circumferential side of the insertion space 50 so as to come into contact with the outer circumferential surface of the pipe 2.

In the example in FIG. 1, the locking member 40 is located more to the far side in the insertion direction ID (i.e. the axial first side) than the sealing member 30.

Alternatively, the sealing member 30 may be located more to the far side in the insertion direction ID (i.e. the axial first side) than the locking member 40. In this case, however, when inserting the pipe 2 into the insertion space 50, the inner circumferential surface of the pipe 2 is scratched by the locking member 40 and then comes into contact with the sealing member 30. Potential damage to the inner circumferential surface of the pipe 2 caused by the locking member 40 can lead to the formation of a clearance between the inner circumferential surface of the pipe 2 and the sealing member 30. This can decrease the effect of suppressing fluid leakage by the sealing member 30. Therefore, in terms of preventing fluid leakage, the locking member 40 is preferably located more to the far side in the insertion direction ID (i.e. the axial first side) than the sealing member 30 as in the example in FIG. 1.

In the example in FIG. 1, the end of the large-diameter cylindrical portion 12 of the pipe coupling body 10 on the axial second side (the left side in FIG. 1) is located more to the axial first side (the right side in FIG. 1) than the first groove 14 and the second groove 13. Such a structure is preferable because, for example in the case of producing the pipe coupling body 10 by molding, the pipe coupling body 10 can be easily taken out of the mold.

In this embodiment, the circumferential wall portion 21 of the cover 20 has one or more (four in the example in FIG. 2) through holes 20a, as illustrated in FIGS. 1 and 2. In this embodiment, these through holes 20a are arranged with spacings along the circumferential direction. In a state in which the cover 20 is inserted on the inner circumferential side of the large-diameter cylindrical portion 12 of the pipe coupling body 10, at least part of the through holes 20a of the cover 20 is exposed to the outside without being covered with the large-diameter cylindrical portion 12. This allows an operator who inserts the pipe 2 to visually recognize from outside that the pipe 2 has been inserted all the way into the insertion space 50.

The same effect can be achieved even when the through holes 20a are replaced with windows made of transparent resin or the like. The same effect can be achieved even when the whole or part of the cover 20 is made of transparent resin that is preferably harder than the material of the pipe 2.

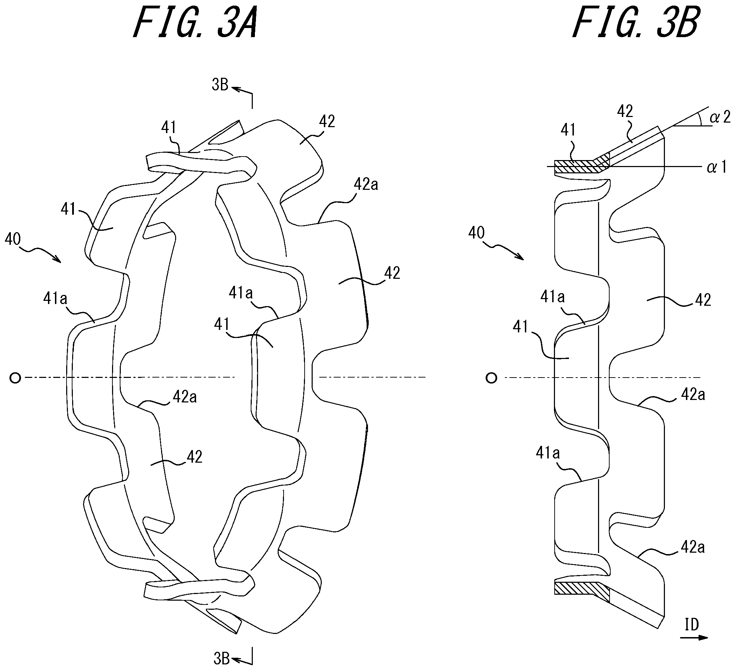

FIGS. 3A and 3B illustrate the locking member 40 according to this embodiment. FIGS. 3A and 3B also illustrate the position of the central axis O of the pipe coupling 1 and the insertion direction ID in a state in which the locking member 40 is mounted on the inner cylindrical portion 110, for the sake of convenience. In a state in which the locking member 40 is installed in the pipe coupling 1, the central axis O of the pipe coupling 1 approximately matches the central axis of the locking member 40.

In this embodiment, the locking member 40 bends between the inner cylinder engaging portion 41 and the pipe locking portion 42, as illustrated in FIGS. 3A and 3B. More specifically, in this embodiment, the inner cylinder engaging portion 41 of the locking member 40 extends straight approximately in parallel with the axial direction of the locking member 40. The pipe locking portion 42 of the locking member 40 extends straight from the end (the end on the axial first side) of the inner cylinder engaging portion 41 on the far side in the insertion direction ID toward the far side in the insertion direction ID and the outer circumferential side. In this embodiment, the locking member 40 bends between the inner cylinder engaging portion 41 and the pipe locking portion 42, thus assuming a shape like an inequality sign "<" in a sectional view. The elastic deformation effect of this locking member 40 eases the insertion of the pipe 2 and also eases the biting of the locking member 40 into the pipe 2, as compared with, for example, a structure in which the locking member 40 extends straight from the inner cylinder engaging portion 41 to the pipe locking portion 42.

In this embodiment, the inclination angle α2 of the pipe locking portion 42 that is 90° or less with respect to the axial direction of the locking member 40 is preferably larger than the inclination angle α1 of the inner cylinder engaging portion 41 that is an acute angle with respect to the axial direction of the locking member 40, in a sectional view along the central axis O of the locking member 40.

In the case where the angle α2 of the pipe locking portion 42 on the far side in the insertion direction ID with respect to the axial direction is relatively large, the pipe locking portion 42 can lock the inner circumferential surface of the pipe 2 more firmly.

In the case where the angle α1 of the inner cylinder engaging portion 41 on the near side in the insertion direction ID with respect to the axial direction is relatively small, the inner cylinder engaging portion 41 can be held on the wall surface of the first groove 14 more firmly. Accordingly, for example when the pipe 2 once locked by the locking member 40 is pulled in the direction opposite to the insertion direction ID, the locking member 40 can be effectively prevented from warping in the direction opposite to the insertion direction ID due to tension transmitted from the pipe 2. In particular, in the case where the angle α1 is approximately 0°, i.e. in the case where the inner cylinder engaging portion 41 extends approximately in parallel with the axial direction of the locking member 40, the load from the pipe 2 in the axial direction can be reliably transmitted to the inner cylindrical portion 110, with it being possible to prevent warpage of the locking member 40 very effectively.

The inner cylinder engaging portion 41 may extend in a direction inclined at an acute angle with respect to the axial direction. In detail, the inner cylinder engaging portion 41 may extend from the pipe locking portion 42 gradually toward the outer circumferential side or the inner circumferential side, in the direction opposite to the insertion direction ID (i.e. toward the left side in FIG. 3B).

In terms of more effective locking of the inner circumferential surface of the pipe 2 by the pipe locking portion 42, the inclination angle α2 of the pipe locking portion 42 that is 90° or less with respect to the axial direction of the locking member 40 is preferably an acute angle, more preferably 10° to 50°, and further preferably 20° to 40°.

In terms of firmer holding of the inner cylinder engaging portion 41 on the wall surface of the first groove 14, the inclination angle α1 of the inner cylinder engaging portion 41 that is an acute angle with respect to the axial direction of the locking member 40 is preferably 0° to 20°, and further preferably 0° to 10°. In the example in FIGS. 3A and 3B, the angle α1 is 0°.

The difference (α2 - α1) between the inclination angle α2 of the pipe locking portion 42 that is 90° or less with respect to the axial direction and the inclination angle α1 of the inner cylinder engaging portion 41 that is an acute angle with respect to the axial direction is preferably 0° to 50°, and further preferably 20° to 40°.

In the example in FIGS. 3A and 3B, the inner cylinder engaging portion 41 of the locking member 40 extends intermittently along the circumferential direction of the locking member 40 (i.e. the circumferential direction of the inner cylindrical portion 110 in a state in which the locking member 40 is installed around the inner cylindrical portion 110). More specifically, the inner cylinder engaging portion 41 has a plurality of slits 41a spaced in the circumferential direction, and is discontinuous in the circumferential direction because of these slits 41a.

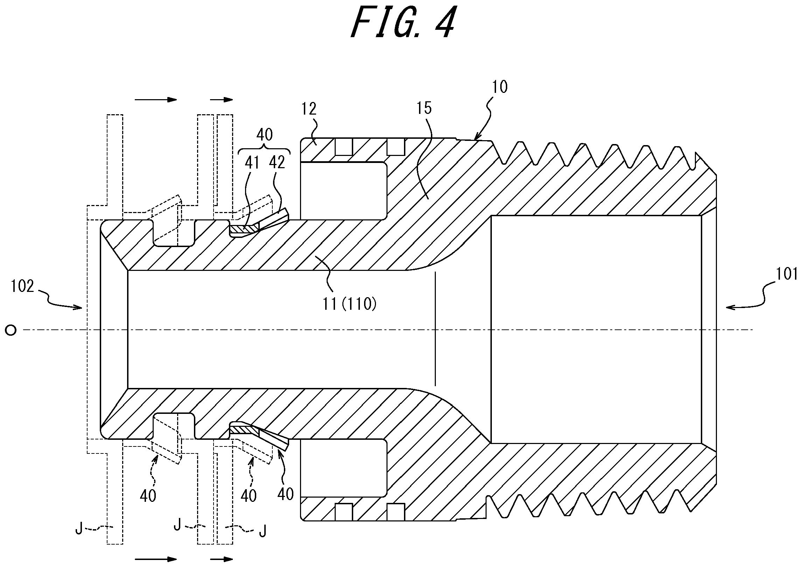

This eases diameter-expansion deformation and diameter-reduction deformation of the inner cylinder engaging portion 41. Therefore, the locking member 40 can be mounted on the inner cylindrical portion 110 more easily when assembling the pipe coupling 1. For example, in an operation of housing the locking member 40 into the first groove 14, first the inner cylinder engaging portion 41 of the locking member 40 is diameter-expansion deformed and fitted onto the outer circumferential surface of the inner cylindrical portion 110, and moved while being pushed in the insertion direction ID using, for example, a jig J having a hole with approximately the same diameter as the outer diameter of the inner cylindrical portion 110, as illustrated in FIG. 4. Since the inner cylinder engaging portion 41 can be easily diameter-expansion deformed, this operation is easy. When housing the locking member 40 into the first groove 14, the inner cylinder engaging portion 41 that has been diameter-expansion deformed is diameter-reduction deformed and can firmly engage with the wall surface of the first groove 14. Thus, the inner cylinder engaging portion 41 can be firmly held on the wall surface of the first groove 14.

In the example in FIGS. 3A and 3B, the pipe locking portion 42 of the locking member 40 extends intermittently along the circumferential direction of the locking member 40 (i.e. the circumferential direction of the inner cylindrical portion 110 in a state in which the locking member 40 is installed around the inner cylindrical portion 110). More specifically, the pipe locking portion 42 has a plurality of slits 42a spaced in the circumferential direction, and is discontinuous in the circumferential direction because of these slits 42a.

This eases bending deformation of the pipe locking portion 42 around its end connected to the inner cylinder engaging portion 41. Hence, when connecting the pipe 2 to the pipe coupling 1, the pipe 2 can be inserted on the outer circumferential side of the inner cylindrical portion 110 (i.e. the outer circumferential side of the locking member 40) with a smaller insertion force. With this structure, for example, when the pipe 2 once locked by the locking member 40 is pulled in the direction opposite to the insertion direction ID, the pipe locking portion 42 easily bites into the inner circumferential surface of the pipe 2. Consequently, the pipe locking portion 42 can lock the inner circumferential surface of the pipe 2 more effectively.

This also eases diameter-expansion deformation and diameter-reduction deformation of the locking member 40. Therefore, the locking member 40 can be mounted on the inner cylindrical portion 110 more easily when assembling the pipe coupling 1.

In this embodiment, the slits 41a of the inner cylinder engaging portion 41 and the slits 42a of the pipe locking portion 42 alternate along the circumferential direction of the locking member 40. This further eases diameter-expansion deformation and diameter-reduction deformation of the locking member 40.

The pipe coupling and the locking member according to the present disclosure are not limited to the examples described above, and various modification are possible.

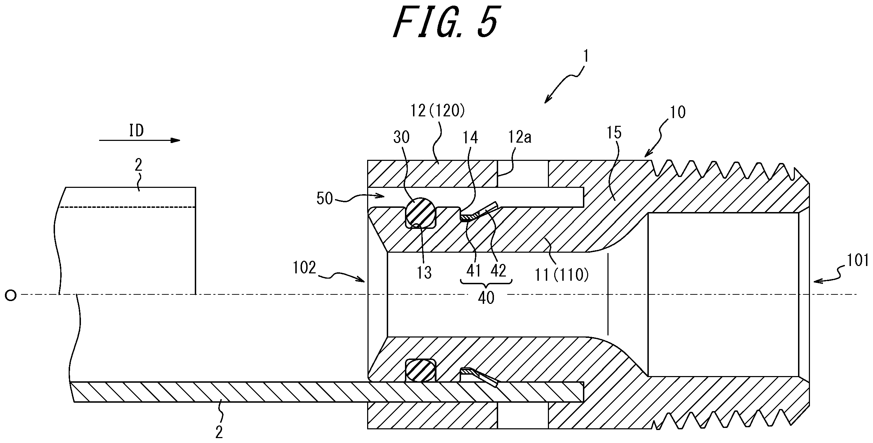

FIG. 5 illustrates a first modification of the pipe coupling 1. In the example in FIG. 5, the pipe coupling 1 does not include the cover 20, and the large-diameter cylindrical portion 12 of the pipe coupling body 10 is located on the outer circumferential side of the small-diameter cylindrical portion 11 approximately over the entire length of the small-diameter cylindrical portion 11 of the pipe coupling body 10 (i.e. the inner cylindrical portion 110 of the pipe coupling 1) in the axial direction. The large-diameter cylindrical portion 12 constitutes the outer cylindrical portion 120 of the pipe coupling 1. The annular insertion space 50 into which the pipe 2 is to be inserted is defined between the outer circumferential surface of the small-diameter cylindrical portion 11 (i.e. the inner cylindrical portion 110) and the inner circumferential surface of the large-diameter cylindrical portion 12 (i.e. the outer cylindrical portion 120). The other parts are the same as those in the example in FIG. 1. In the example in FIG. 5, the number of parts can be further reduced because the pipe coupling 1 does not include the cover 20. In this example, too, the large-diameter cylindrical portion 12 can effectively suppress diameter-expansion deformation of the pipe 2 inserted in the insertion space 50.

Here, the large-diameter cylindrical portion 12 preferably has a through hole 12a, as illustrated in FIG. 5. This allows an operator who inserts the pipe 2 to visually recognize from outside that the pipe 2 has been inserted all the way into the insertion space 50.

In the example in FIG. 5, the end of the large-diameter cylindrical portion 12 of the pipe coupling body 10 (i.e. the outer cylindrical portion 120) on the axial second side (the left side in FIG. 5) may be located more to the axial first side (the right side in FIG. 5) than the end of the small-diameter cylindrical portion 11 of the pipe coupling body 10 (i.e. the inner cylindrical portion 110 of the pipe coupling 1) on the axial second side (the left side in FIG. 5). For example, the end of the large-diameter cylindrical portion 12 of the pipe coupling body 10 (i.e. the outer cylindrical portion 120) on the axial second side (the left side in FIG. 5) may be located more to the axial first side (the right side in FIG. 5) than the first groove 14 and the second groove 13, in terms of ease of production of the pipe coupling body 10.

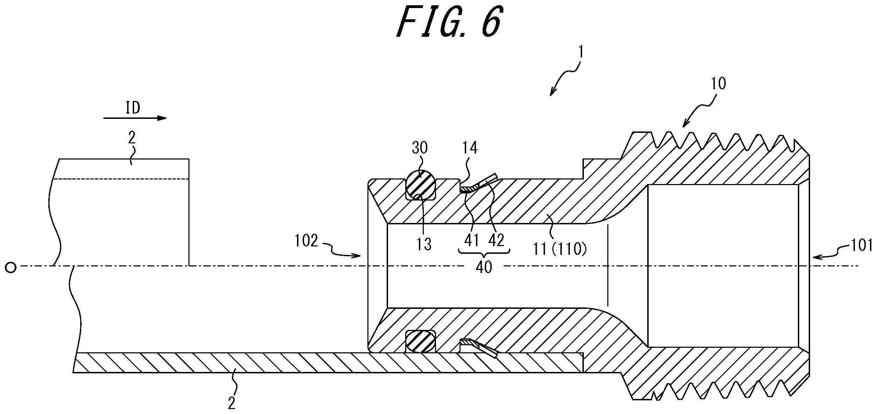

FIG. 6 illustrates a second modification of the pipe coupling 1. In the example in FIG. 6, the pipe coupling 1 does not include the cover 20, and also the pipe coupling body 10 does not include the large-diameter cylindrical portion 12. That is, the pipe coupling 1 includes the inner cylindrical portion 110, but does not include the outer cylindrical portion 120. Accordingly, the annular insertion space 50 is defined on the outer circumferential side of the inner cylindrical portion 110. The other parts are the same as those in the example in FIG. 1. In the example in FIG. 6, since the pipe coupling 1 does not include the outer cylindrical portion 120, the outer diameter of the pipe coupling 1 can be further reduced, and the number of parts and the materials can be further reduced. Moreover, in this example, the outer circumferential surface of the pipe 2 inserted on the outer circumferential side of the inner cylindrical portion 110 is entirely exposed to the outside. This allows an operator who inserts the pipe 2 to easily avoid insufficient insertion of the pipe 2.

The pipe coupling 1 in the example in FIG. 6 does not have any part that suppresses diameter-expansion deformation of the pipe 2 from the outer circumferential side of the pipe 2, and therefore is preferably used under relatively low pressure conditions.

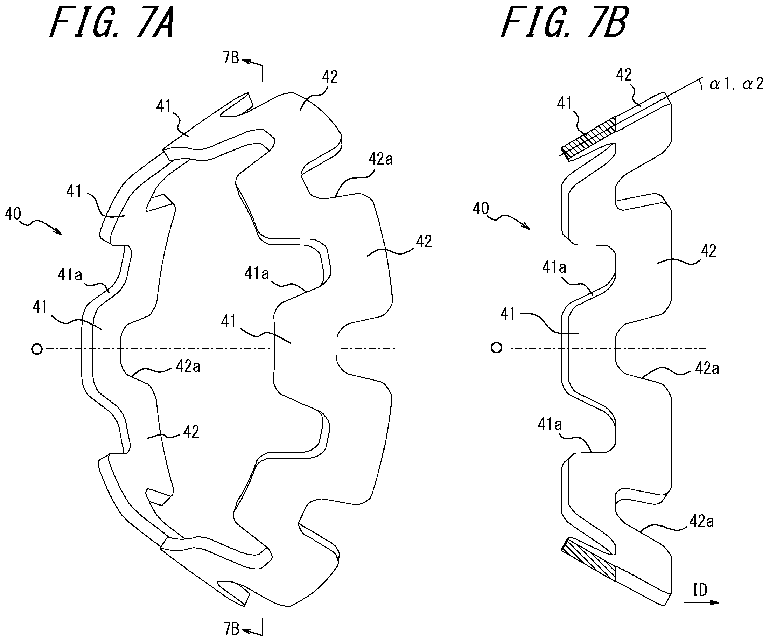

FIGS. 7A and 7B illustrate a first modification of the locking member 40. The locking member 40 in the example in FIGS. 7A and 7B is suitable for use in the pipe coupling 1 of each of the foregoing examples. In the example in FIGS. 7A and 7B, the inner cylinder engaging portion 41 and the pipe locking portion 42 in the locking member 40 extend along the side surface of a common virtual cone that gradually expands in diameter in the insertion direction ID (i.e. to the right side in FIGS. 7A and 7B). More specifically, the locking member 40 extends straight toward the far side in the insertion direction ID and the outer circumferential side, over the entire length in the axial direction. Hence, the inclination angle α1 of the inner cylinder engaging portion 41 that is an acute angle with respect to the axial direction of the locking member 40 and the inclination angle α2 of the pipe locking portion 42 that is an acute angle with respect to the axial direction of the locking member 40 are the same. The other parts are the same as those in the example in FIGS. 3A and 3B.

The locking member 40 in the example in FIGS. 7A and 7B has higher rigidity and is less deformable than that in the example in FIGS. 3A and 3B. Accordingly, for example, even when the pipe 2 once locked by the locking member 40 is pulled in the direction opposite to the insertion direction ID, the locking member 40 resists deformation such as warpage, and can be held on the inner cylindrical portion 110 more firmly. In addition, since bending is not necessary in the production of the locking member 40, the production is easier than in the example in FIGS. 3A and 3B.

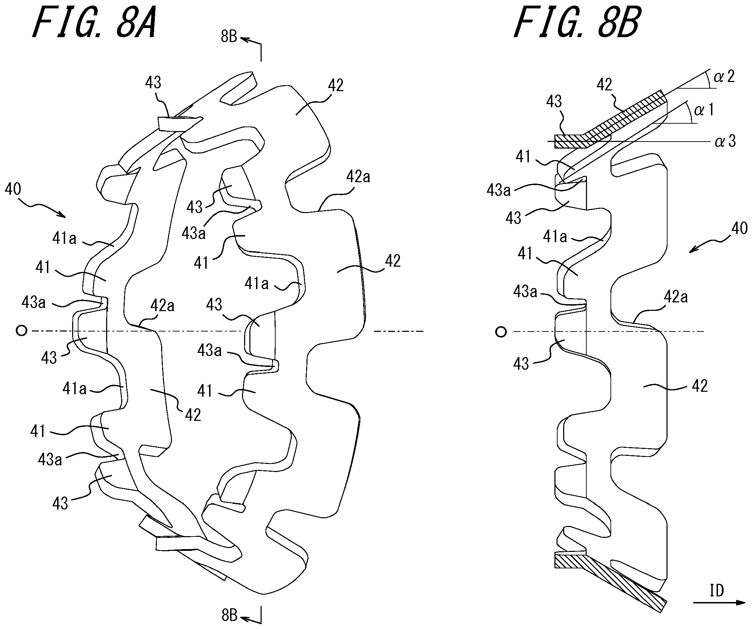

FIGS. 8A and 8B illustrate a second modification of the locking member 40. The locking member 40 in the example in FIGS. 8A and 8B is suitable for use in the pipe coupling 1 of each of the foregoing examples. In the example in FIGS. 8A and 8B, the locking member 40 further includes an additional piece portion 43 extending from the pipe locking portion 42 in the direction opposite to the insertion direction ID (i.e. toward the near side in the insertion direction ID (the left side in FIGS. 8A and 8B)). The inclination angle α3 of the additional piece portion 43 that is an acute angle with respect to the axial direction of the locking member 40 is different from the inclination angle α1 of the inner cylinder engaging portion 41 that is an acute angle with respect to the axial direction of the locking member 40. More specifically, the additional piece portion 43 and the inner cylinder engaging portion 41 are each intermittently provided in the circumferential direction so that they alternate in the circumferential direction, and each extend from the pipe locking portion 42 in the direction opposite to the insertion direction ID (i.e. toward the left side in FIGS. 8A and 8B). The additional piece portion 43 and the inner cylinder engaging portion 41 are separated from each other by slits 41a and 43a. Moreover, in the example in FIGS. 8A and 8B, the inclination angle α1 of the inner cylinder engaging portion 41 that is an acute angle with respect to the axial direction is larger than the inclination angle α3 of the additional piece portion 43 that is an acute angle with respect to the axial direction. The other parts are the same as those in the example in FIGS. 7A and 7B.

The locking member 40 in the example in FIGS. 8A and 8B can be installed on the inner cylindrical portion 110 more easily, when assembling the pipe coupling 1. For example, in an operation of housing the locking member 40 into the first groove 14 as described above with respect to FIG. 4, when the inner cylinder engaging portion 41 fitted onto the outer circumferential surface of the inner cylindrical portion 110 is being moved while being pushed in the insertion direction ID using, for example, the jig J having a hole with approximately the same diameter as the outer diameter of the inner cylindrical portion 110, the jig J comes into contact with both the inner cylinder engaging portion 41 and the additional piece portion 43. An operator who assembles the pipe coupling 1 can perform the operation easily, because the pushing force can be exerted on the locking member 40 at more distributed positions on the jig J.

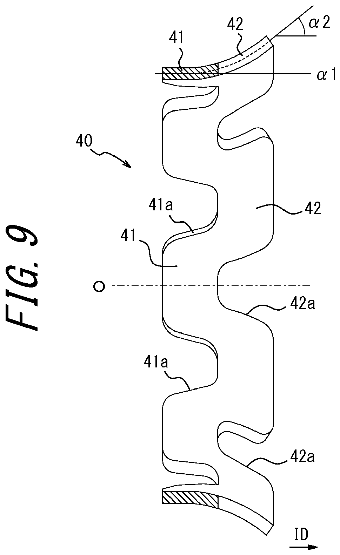

FIG. 9 illustrates a third modification of the locking member 40. The locking member 40 in the example in FIG. 9 is suitable for use in the pipe coupling 1 of each of the foregoing examples. The locking member 40 in the example in FIG. 9 differs from that in the example in FIGS. 3A and 3B in that the locking member 40 does not bend between the inner cylinder engaging portion 41 and the pipe locking portion 42 in a sectional view along the central axis O of the locking member 40, and smoothly curves convexly to the central axis O side from the inner cylinder engaging portion 41 to the pipe locking portion 42 to form an approximately trumpet shape.

In the structure in which the locking member 40 bends between the inner cylinder engaging portion 41 and the pipe locking portion 42 as in the example in FIGS. 3A and 3B, when inserting the pipe 2 on the outer circumferential side of the inner cylindrical portion 110, the resistance force against the insertion of the pipe 2 arises suddenly upon the axial end of the pipe 2 coming into contact with the wall surface of the pipe locking portion 42. In such a case, the operator may feel that the insertion is not easy. The locking member 40 in the example in FIG. 9 smoothly curves from the inner cylinder engaging portion 41 to the pipe locking portion 42. Therefore, when inserting the pipe 2 on the outer circumferential side of the inner cylindrical portion 110, the resistance force increases gradually upon the axial end of the pipe 2 coming into contact with the wall surface of the pipe locking portion 42. In such a case, the operator who inserts the pipe 2 may feel that the insertion is easy.

In the structure in which the locking member 40 bends between the inner cylinder engaging portion 41 and the pipe locking portion 42 as in the example in FIGS. 3A and 3B, strain concentrates at the bend, as a result of which the locking member 40 may fracture from the bend. In the structure of the example in FIG. 9, on the other hand, the concentration of strain in the locking member 40 is suppressed, so that a fracture of the locking member 40 can be prevented.

In the example in FIG. 9, the "inclination angle α2 of the pipe locking portion 42 that is 90° or less with respect to the axial direction of the locking member 40" is measured as the angle of the pipe locking portion 42 at the end on the far side in the insertion direction ID (the right end in FIG. 9). In the example in FIG. 9, the "inclination angle α1 of the inner cylinder engaging portion 41 that is an acute angle with respect to the axial direction of the locking member 40" is measured as the angle of the inner cylinder engaging portion 41 at the end on the near side in the insertion direction ID (the left end in FIG. 9).

### INDUSTRIAL APPLICABILITY

A pipe coupling according to the present disclosure can be used in pipes of any fluids such as cold water, hot water, oil, and gas.

A locking member according to the present disclosure can be used in pipe couplings.

### REFERENCE SIGNS LIST

- 1: pipe coupling
- 2: pipe
- 10: pipe coupling body
- 11: small-diameter cylindrical portion
- 12: large-diameter cylindrical portion
- 12a: through hole
- 13: second groove
- 14: first groove
- 15: connecting portion
- 20: cover
- 20a: through hole
- 21: circumferential wall portion
- 22: end wall portion
- 30: sealing member
- 40: locking member
- 41: inner cylinder engaging portion
- 41a: slit
- 42: pipe locking portion
- 42a: slit
- 43: additional piece portion
- 43a: slit
- 50: insertion space
- 101, 102: pipe connection port
- 110: inner cylindrical portion
- 120: outer cylindrical portion
- J: jig
- O: central axis

## Claims

1. A pipe coupling comprising:
an inner cylindrical portion configured such that, on an outer circumferential side of the inner cylindrical portion, a pipe is to be inserted in a predetermined insertion direction; and
an annular locking member housed in a first groove formed on an outer circumferential surface of the inner cylindrical portion, and configured to lock an inner circumferential surface of the pipe in a state in which the pipe is inserted on the outer circumferential side of the inner cylindrical portion.

2. The pipe coupling according to claim 1, further comprising
an outer cylindrical portion located on the outer circumferential side of the inner cylindrical portion,
wherein an insertion space into which the pipe is to be inserted is defined between the outer circumferential surface of the inner cylindrical portion and an inner circumferential surface of the outer cylindrical portion.

3. The pipe coupling according to claim 1 or 2, further comprising
a sealing member housed in a second groove formed on the outer circumferential surface of the inner cylindrical portion, and configured to seal between the outer circumferential surface of the inner cylindrical portion and the inner circumferential surface of the pipe fluid-tight in a state in which the pipe is inserted on the outer circumferential side of the inner cylindrical portion.

4. The pipe coupling according to any one of claims 1 to 3, wherein the locking member includes:
an inner cylinder engaging portion engaging with a wall surface of the first groove formed on the outer circumferential surface of the inner cylindrical portion; and
a pipe locking portion extending from an end of the inner cylinder engaging portion on a far side in the insertion direction toward an outer circumferential side, and configured to lock, at least at an outer circumferential end of the pipe locking portion, the inner circumferential surface of the pipe to be inserted on the outer circumferential side of the inner cylindrical portion.

5. The pipe coupling according to claim 4, wherein, the locking member is configured such that, an inclination angle α2 of the pipe locking portion that is 90° or less with respect to an axial direction of the locking member is larger than an inclination angle α1 of the inner cylinder engaging portion that is an acute angle with respect to the axial direction of the locking member.

6. The pipe coupling according to claim 4, wherein, the locking member is configured such that, the inner cylinder engaging portion and the pipe locking portion extend along a side surface of a common virtual cone that gradually expands in diameter in the insertion direction.

7. The pipe coupling according to claim 4, wherein the locking member further includes an additional piece portion extending from the pipe locking portion in a direction opposite to the insertion direction, and
an inclination angle α3 of the additional piece portion that is an acute angle with respect to an axial direction of the locking member is different from an inclination angle α1 of the inner cylinder engaging portion that is an acute angle with respect to the axial direction of the locking member.

8. The pipe coupling according to any one of claims 4 to 7, wherein the locking member is configured such that the inner cylinder engaging portion extends intermittently along a circumferential direction of the locking member.

9. The pipe coupling according to any one of claims 4 to 8, wherein the locking member is configured such that the pipe locking portion extends intermittently along a circumferential direction of the locking member.

10. The locking member configured to be used in the pipe coupling according to any one of claims 1 to 9.
